**Europäisches Patentamt**

**European Patent Office**

**Office européen des brevets**

(19)

(11) Veröffentlichungsnummer: **0 075 216**
**B1**

(12)
# EUROPÄISCHE PATENTSCHRIFT

(45) Veröffentlichungstag der Patentschrift:
**24.07.85**

(21) Anmeldenummer: **82108346.6**

(22) Anmeldetag: **10.09.82**

(51) Int. Cl.⁴: **C 08 F 210/14, C 08 F 222/20,
C 08 L 101/00 // (C08F210/14,
222:20),(C08F222/20, 210:14)**

(54) **Copolymere aus alpha-beta-ungesättigten Dicarbonsäureestern, Verfahren zu deren Herstellung sowie deren Verwendung als Gleitmittel für die Kunststoffverarbeitung.**

(30) Priorität: **17.09.81 DE 3136931**

(43) Veröffentlichungstag der Anmeldung:
**30.03.83 Patentblatt 83/13**

(45) Bekanntmachung des Hinweises auf die Patenterteilung:
**24.07.85 Patentblatt 85/30**

(84) Benannte Vertragsstaaten:
**AT BE CH FR GB IT LI NL**

(56) Entgegenhaltungen:
**FR - A - 2 324 654
US - A - 3 356 637**

(73) Patentinhaber: **Akzo GmbH,
Postfach 10 01 49 Kasinostrasse 19-23,
D-5600 Wuppertal-1 (DE)**

(72) Erfinder: **Beck, Heinz, Dr. Dipl.-Chem., Marie
Juchacz-Strasse 42, D-5160 Düren (DE)**
Erfinder: **Frassek, Karl Heinz, Martinusstrasse 16,
D-5163 Langerwehe (DE)**
Erfinder: **Verhulst, Eduard Matthijs, J.P. Coenstraat 19,
NL-6904 BA Zevenaar (NL)**
Erfinder: **Giezen, Egenius Arnoldus, Willem
Barentszstraat 9, NL-6991 BA Rheden (NL)**

**Beschreibung**

Die Erfindung betrifft Copolymere aus $\alpha$-$\beta$-ungesättigten Dicarbonsäureestern mit $\alpha$-Olefinen, deren Herstellung und deren Verwendung als Gleitmittel für die formgebende Verarbeitung von Kunststoffen.

Aus der DE-OS 2 727 239 sind Olefin-Maleinsäure-Copolymer-Derivate bekannt, die aus Olefinen mit durchschnittlich 2 - 24 Kohlenstoffatomen und Maleinsäure aufgebaut sind und mit einwertigen Alkoholen mit einer Kettenlänge von 2 - 20 Kohlenstoffatomen im Molverhältnis 1 : 0,5 bis 1 : 2 Maleinsäure zu Alkohol verestert sind. Hergestellt werden die dort beschriebenen Olefin-Maleinsäure-Copolymer-Derivate durch Copolymerisation von Maleinsäure oder Maleinsäureanhydrid mit $\alpha$-Olefinen und anschliessende Veresterung zum Halb- oder zum Diester. Die dort beschriebenen Olefin-Maleinsäure-Copolymer-Derivate sind als Gleitmittel für die formgebende Verarbeitung von Kunststoffen besonders geeignet.

Darüber hinaus sind hochmolekulare Copolymere aus $\alpha$-Olefinen und $\alpha$-$\beta$-ungesättigten Dicarbonsäureestern beispielsweise als Haarsprays (AU-PS 254 327) und als Mittel zur Beschichtung von Arzneimitteln (AU-PS 263 011) bekannt geworden. Diese wurden durch Copolymerisation von $\alpha$-Olefinen und $\alpha$-$\beta$-ungesättigten Dicarbonsäuren bzw. -säureanhydriden und nachträgliche Veresterung des Copolymeren hergestellt.

Aus der DE-OS 1 770 860 ist ein Copolymerisat aus einem $C_{22}$-$C_{28}$-1-Olefin und Dibehenylmaleat bekannt, welches durch Polymerisation bei 150 °C erhalten wurde. Es wurde vorgeschlagen, das Produkt Kohlenwasserstoffen zuzusetzen, um den Stockpunkt zu erniedrigen bzw. insgesamt die Fliessfähigkeit zu verbessern.

In der AU-PS 479 746 sind Copolymerisate aus $\alpha$-$\beta$-ungesättigten Dicarbonsäureestern mit ein oder zwei geradkettigen Estergruppen mit 18 - 44 C-Atomen mit $C_{18}$-$C_{46}$-$\alpha$Olefinen als Fliessfähigkeitsverbesserer für wachsartige Kohlenwasserstoffe beschrieben, die eine Senkung des Pourpoints der Kohlenwasserstofföle bewirken.

Es sind bereits eine Vielzahl von Substanzen als Gleitmittel für formgebende Verarbeitung von Kunststoffen vorgeschlagen worden. In ihren Eigenschaften weisen sie mehr oder weniger grosse Unterschiede auf oder besitzen in mancher Beziehung Vorteile gegenüber anderen. Bedeutsam ist die Verträglichkeit von Gleitmitteln mit bestimmten Stabilisatoren, die ebenfalls bei der Verformung von Kunststoffen diesen zugemischt werden, um Abbauerscheinungen bei den Beanspruchungen, wie sie bei der Verformung auftreten, zu verhindern. Als Stabilisatoren werden beispielsweise Metallsalze oder metallorganische Verbindungen eingesetzt. Ein bekannter Stabilisatortyp, der zu Stabilisierung von PVC verwendet wird, baut sich aus Zinnverbindungen auf. Manche, gerade dieser Zinnstabilisatoren sind mit Gleitmitteln nicht gut verträglich. Zu den Stabilisatoren, für die dieses in besonderem Masse gilt, gehört beispielsweise Dibutylzinn-di-monomethylmaleat. Um auch mit diesem in der Praxis sehr bewährten Stabilisator lagerfähige und gut dosierbare Gemische mit Gleitmitteln herstellen zu können, hat man bereits seit längerer Zeit ohne grossen Erfolg Gleitmittel gesucht, die solche Gemische ermöglichen.

Nunmehr wurde festgestellt, dass Copolymerisate aus $\alpha$-$\beta$-ungesättigten Dicarbonsäureestern mit $\alpha$-Olefinen, die dadurch gekennzeichnet sind, dass sie aus $\alpha$-Olefinen mit 8 - 24 C-Atomen und aus $\alpha$-$\beta$-ungesättigten Dicarbonsäureestern, deren Alkoholkomponente äthoxilierte Alkohole mit einem Äthoxilierungsgrad von 1 - 45, vorzugsweise 1 - 20, sind, aufgebaut sind, für solche Gemische hervorragend geeignete Gleitmittel sind.

In bevorzugter Weise sind die Copolymeren so aufgebaut, dass $\alpha$-$\beta$-ungesättigte Dicarbonsäureester $\alpha$-$\beta$-ungesättigten Dicarbonsäure-diester sind. Als $\alpha$-$\beta$-ungesättigte Dicarbonsäureester kommen die Ester von Maleinsäure, Fumarsäure, Citraconsäure, Mesaconsäure oder Itaconsäure in Betracht. Bevorzugt sind jedoch die Ester der Maleinsäure und der Fumarsäure.

Bevorzugt sind die Copolymeren, bei denen das $\alpha$-Olefin unverzweigt ist. Besonders gute Verträglichkeit mit den Stabilisatoren weisen die Copolymeren auf, die aus 10 · 16 C-Atomen aufgebaut sind. Das Molverhältnis $\alpha$-Olefin zu $\alpha$-$\beta$-ungesättigten Dicarbonsäureestern beträgt vorzugsweise 0,5 - 4.

Die erfindungsgemässen Polymeren sind auf zwei Wegen zugänglich, nämlich einmal durch Copolymerisation von $\alpha$-$\beta$-ungesättigten Dicarbonsäuren bzw. deren Anhydriden und anschliessende Veresterung mit äthoxylierten Alkoholen mit einem Äthoxylierungsgrad von 1 - 45. Unter dem Äthoxilierungsgrad soll dabei die Anzahl von Äthenoxideinheiten einer (Poly)äthylenoxidkette verstanden werden, deren eines Ende mit einem Alkohol veräthert ist, während die Hydroxylgruppe am anderen Ende der (Poly)äthylenoxidkette mit der Säuregruppe verestert ist.

Bei diesem Herstellungsweg erhält man beim Polymeren ein Verhältnis von $\alpha$-Olefinen zu $\alpha$-$\beta$-ungesättigtem Dicarbonsäureester im Copolymeren von ungefähr 1 : 1.

Ein solches Verfahren ist erfindungsgemäss dadurch gekennzeichnet, dass $\alpha$-Olefine mit 8 - 24 C-Atomen und $\alpha$-$\beta$-ungesättigte Dicarbonsäuren bei Temperaturen von 80 - 210 °C in Gegenwart eines Peroxidkatalysators in Inertgasatmosphäre copolymerisiert werden und im Anschluss daran mit äthoxilierten Alkoholen mit einem Äthoxilierungsgrad von 1 - 45 im Molverhältnis von 1 : 1 bis 1 : 2 $\alpha$-$\beta$-ungesättigte Dicarbonsäure (bzw. Anhydrid) : äthoxiliertem Alkohol verestert werden.

Der andere Weg geht von den bereits veresterten $\alpha$-$\beta$-ungesättigten Dicarbonsäureestern aus, die mit $\alpha$-Olefinen copolymerisiert werden.

Dieses Verfahren ist dadurch gekennzeichnet, dass $\alpha$-Olefine mit 8 - 24 C-Atomen und $\alpha$-$\beta$-ungesättigte Dicarbonsäureester, deren Alkoholkomponente äthoxilierte Alkohole mit einem Äthoxilierungsgrad von 1 - 20 bei Temperaturen von 140 bis 210 °C, vorzugsweise 160 - 200 °C in Gegenwart eines Peroxidkatalysators in Inertgasatmosphäre copolymerisiert werden.

Auf diesem Wege sind auch die Copolymeren zugänglich deren Verhältnis von $\alpha$-Olefin zu $\alpha$-$\beta$-ungesättigtem Dicarbonsäureester im Copolymeren zwischen 0,5 und 4 liegt. Solche Produkte sind weitgehend bei Zimmertemperatur flüssig.

Obwohl die Menge an Peroxidkatalysator ohne weiteres im Rahmen üblicher Zusätze liegt, ist es im Rahmen der Erfindung bevorzugt, die Peroxidmenge auf den Bereich von 0,005 - 0,05 Mol/Mol Monomer zu begrenzen. Vorzugsweise wird der Peroxidkatalysator in Zeitabständen portionsweise zugegeben. In Ausgestaltung der Erfindung erfolgt die Zugabe des Peroxidkatalysators so, dass zunächst durch Zugabe eines Drittels der Peroxidkatalysatormenge gestartet wird und die Restmenge an Peroxidkatalysator in 8 - 12 Portionen zugegeben wird.

Um zu Molverhältnissen $\alpha$-Olefin zu $\alpha$-$\beta$-ungesättigtem Dicarbonsäureester von 0,5 - 4 im Polymeren zu gelangen, werden die Monomeren im Molverhältnis 0,5 - 7 eingesetzt.

Die erfindungsgemässen Copolymeren sind aufgrund ihres Viskositätsverhaltens und ihrer Emulgierfähigkeit als Additive zur Verringerung des Pourpoints bei Mineralölen und Schmiermitteln einsetzbar.

Als wichtigstes Einsatzgebiet für die erfindungsgemässen Copolymeren sind vor allem Gleitmittel für die formgebende Verarbeitung von thermoplastischen Kunststoffen zu nennen. Dieses wird auch im Rahmen der Beispiele noch stärker herausgestellt, wobei insbesondere die gute Verträglichkeit mit solchem Zinnstabilisatoren hervorzuheben ist, die Liganden am Zinn enthalten, deren Bindung mehr als ionisch, als als covalent anzusehen ist.

Die erfindungsgemässen Copolymeren sind emulgierbar und ergeben stabile Emulsionen. Sie sind daher im Gemisch mit Wachsen und mit den Copolymeren gemäss DE-OS 2 727 239 in Polierwachspräparaten wie beispielsweise Schuhpflegemittel, Bodenpflegemittel, Gleitmittel für die Metallbearbeitung u.ä. verwendbar. In wässrigen Emulsionen können sie auch als Kühlmittel für die spanabhebende und sonstige Verformung von Metallteilen dienen.

Anhand der nachfolgenden Beispiele wird die Erfindung näher erläutert.

*Beispiel 1*

In diesem Beispiel wird die Herstellung von Copolymeren beschrieben, bei denen das $\alpha$-Olefin zu $\alpha$-$\beta$-ungesättigtem Dicarbonsäureester 1 : 1 beträgt und die Halbester gebildet werden.

Ein Mol eines C14/16-$\alpha$-Olefingemisches (mittleres Molekulargewicht 205) wurde in einem Reaktionsgefäss nach Spülen mit Stickstoff auf die Reaktionstemperatur von 150°C erhitzt. Es wurden zehn Portionen von je 0,1 Mol Maleinsäureanhydrid mit 0,005 Mol Di-t-butylperoxid in Abständen von 30 Minuten zugegeben. Etwa 30 Minuten nach der letzten Zugabe wurde 1 Mol des vorgesehenen äthoxilierten Alkohols hinzugefügt und weitere 2 Stunden auf einer Temperatur von 150°C gehalten. Auf die genannte Weise wurden die nachfolgend tabellarisch zusammengestellten Copolymeren hergestellt.

| Bezeichnung | $\alpha$-Olefin | äthoxilierter Alkohol |
|---|---|---|
| 1A | C14/16 | Äthylglykol |
| 1B | C14/16 | Methylglykol |
| 1C | C14/16 | Methyldiglykol |
| 1D | C14/16 | Methoxypolyäthylenglykol, Äthoxylierungsgr. = 7 |
| 1E | C14/16 | Methoxypolyäthylenglykol, Äthoxylierungsgr. = 12 |

*Beispiel 2*

In diesem Beispiel wird die Herstellung von Copolymeren beschrieben, bei denen das Verhältnis von $\alpha$-Olefin zu $\alpha$-$\beta$-ungesättigtem Dicarbonsäureester vom Verhältnis 1 : 1 abweichen kann und bei dem die $\alpha$-$\beta$-ungesättigten Dicarbonsäurediester mit den $\alpha$-Olefinen copolymerisiert werden.

5 Mole Maleinsäureanhydrid (bzw. eine äquivalente Menge Fumarsäure), 14 Mole eines äthoxilierten Alkohols, 25 g p.-Toluolsulfonsäure und 500 ml Toluol werden gemischt und auf Siedetemperatur erhitzt. Das Reaktionswasser und anschliessend bei Vakuum das Toluol und der überschüssige Alkohol werden abdestilliert. Danach wird auf 160°C erhitzt

und das $\alpha$-Olefin zugesetzt. Das Reaktionsgefäss wird mit Stickstoff gespült und in 11 Portionen werden im Abstand von 30 Minuten jeweils 0,03 Mol Di--t-butylperoxid zugefügt. 30 Minuten nach der letzten Peroxidzugabe wird der Überschuss $\alpha$-Olefin im Vakuum abdestilliert. Eine Verfärbung — insbesondere bei kleinen Verhältnissen $\alpha$-Olefin zu $\alpha$-$\beta$-ungesättigtem Dicarbonsäureester — kann durch Zugabe von Natriumhypophosphit nach der Veresterung verhindert werden.

Nach dem vorstehend beschriebenen Verfahren wurden folgende tabellarisch aufgeführten Copolymere hergestellt.

| Bezeichnung | $\alpha$-Olefin | äthoxilierter Alkohol | Polymeren Verhältnis | Polymeris. Temperatur |
|---|---|---|---|---|
| 2A | C10 | Äthylglykol | 3 : 1 | 170 |
| 2B | C10 | Äthylglykol | 2,59 : 1 | 170 |
| 2C | C10 | Äthylglykol | 1 : 1 | 170 |
| 2D | C10 | Methylglykol | 1 : 1 | 170 |
| 2E | C10 | Methyldiglykol | 3 : 1 | 170 |
| 2F | C10 | Methyldiglykol | 1 : 1 | 170 |
| 2G | C12 | Äthylglykol | 1 : 1 | 200 |
| 2H | C12 | Methylglykol | 1 : 1 | 200 |
| 2I | C12 | Methyldiglykol | 1 : 1 | 200 |
| 2K | C12 | Methyldiglykol | 3 : 1 | 200 |
| 2L | C14/16 | Methylglykol | 0,82 : 1 | 200 |
| 2M | C14/16 | Methylglykol | 1 : 1 | 200 |
| 2N | C14/16 | Methylglykol | 0,68 : 1 | 200 |
| 2O | C14/16 | Äthylglykol | 1 : 1 | 200 |
| 2P | C14/16 | Äthylglykol | 0,68 : 1 | 200 |
| 2Q | C14/16 | Äthylglykol | 0,5 : 1 | 160 |
| 2R | C14/16 | Methyldiglykol | 1 : 1 | 200 |

*Beispiel 3*

Die nach Beispiel 1 und Beispiel 2 hergestellten Copolymeren wurden auf ihre Verträglichkeit mit schwefelfreien Zinnstabilisatoren geprüft. Als Modellsubstanz diente dabei Dibutylzinndimonomethylmaleat.

Nach dem Mischen der Copolymeren mit dem Stabilisator in verschiedenen Gewichtsverhältnissen bei 90°C wurden die Proben auf Zimmertemperatur abgekühlt und eine Woche bei Zimmertemperatur gelagert.

Dann wurde beobachtet, ob eine Phasentrennung erfolgt war oder ob eine Ausfällung stattgefunden hatte.

Es wurde festgestellt, dass bei allen in den Beispielen 1 und 2 aufgeführten Copolymeren beim Gewichtsverhältnis 1 : 1 Copolymer zu Zinnstabilisator weder eine Phasentrennung noch eine Ausfällung stattgefunden hatte. Beim Gewichtsverhältnis 1 : 3 Copolymer zu Zinnstabilisator wurde der gleiche Befund für die Copolymeren 1E; 2C; 2D; 2E; 2H; 2I; 2L; 2N; 2R, erhalten, während sich bei den übrigen Copolymeren bei diesem Gewichtsverhältnis bereits eine Trübung zeigte.

*Beispiel 4*

Das Verhalten von Kunststoffmassen bei der Verformung aus der Schmelze lässt sich durch Messungen im «Brabender Plasticorder» beurteilen. Nachfolgend werden solche Messungen beschrieben, die an Kunststoffmassen durchgeführt worden waren, die aus 100 Gewichtsteilen Suspensions PVC, 2 Gewichtsteilen Dibutylzinndimonomethylmaleat mit Anteilen von 0,5 Gewichtsteilen eines der in Beispiel 1 und 2 näher erläuterten Copolymeren enthielten. Zum Vergleich wurden ein im Handel erhältliches Gleitmittel in gleicher Weise untersucht. Die Ergebnisse sind in der Tabelle 1 zusammengestellt, wobei als Bezeichnung für das im Handel erhältliche Gleitmittel I gewählt wurde. Es handelt sich dabei um einen Äthylenglykolester der Montansäure.

Innere Gleitmittel erniedrigen die Schmelzviskosität. Dieses zeigt sich bei Messungen im «Brabender-Plasticorder» dass eine geringe Kraft benötigt wird. Äussere Gleitmittel erhöhen die Gelierungszeit und verringern die Haftung des Kunststoffes zur Wand.

Am «Brabender Plasticorder» wurden folgende Bedingungen eingehalten:

Temperatur 160°C
Geschwindigkeit 15 Umdrehungen/Minute
Probengewicht 31 g

Die nachfolgenden Tabellen 1 und 2 zeigen die Ergebnisse hinsichtlich Gelierungszeit, Drehmoment beim Gelieren, Geliertemperatur, Drehmoment 10 Minuten nach dem Gelieren und die Temperatur 10 Minuten nach dem Gelieren.

Ausserdem wurde von 3 mm dicken Prüfscheiben die Transparenz bei einer Wellenlänge von 690 nm gemessen.

Tabelle 1

| Coplymer | Gelierzeit (min.) | Drehmoment beim Gelieren (m·g) | Temperatur beim Gelieren (°C) | Drehmoment 10 min. n. d. Gelieren | Temperatur 10 min. n. d. Gelieren | Transparenz (%) |
|---|---|---|---|---|---|---|
| 1A | 5,7 | 2500 | 156 | 2700 | 160 | 76 |
| 1B | 5,4 | 2650 | 155 | 2700 | 160 | 78 |
| 1C | 6,7 | 2550 | 155 | 2800 | 160 | 78 |
| 1D | 7,2 | 2400 | 156 | 2700 | 160 | 81 |
| 1E | 8,8 | 2400 | 156 | 2700 | 160 | 82 |

Tabelle 2

| Coplymer | Gelierzeit (min.) | Drehmoment beim Gelieren (m·g) | Temperatur beim Gelieren (°C) | Drehmoment 10 min. n. d. Gelieren | Temperatur 10 min. n. d. Gelieren | Transparenz (%) |
|---|---|---|---|---|---|---|
| I | 6,9 | 2600 | 155 | 2750 | 160 | 74 |
| 2A | 11 | 2500 | 155 | 2750 | 160 | 74 |
| 2C | 5,5 | 2600 | 155 | 2775 | 159 | 84 |
| 2D | 5,1 | 2500 | 155 | 2750 | 160 | 81 |
| 2E | 7,1 | 2500 | 154 | 2750 | 160 | 80 |
| 2F | 4,4 | 2550 | 153 | 2750 | 159 | 84 |
| 2G | 6,9 | 2600 | 154 | 2700 | 160 | 81 |
| 2H | 5,2 | 2600 | 154 | 2775 | 159 | 83 |
| 2I | 5,3 | 2600 | 154 | 2800 | 160 | 84 |
| 2K | 6,4 | 2600 | 155 | 2700 | 160 | 81 |
| 2L | 4,9 | 2600 | 154 | 2750 | 160 | 84 |
| 2M | 5,1 | 2500 | 154 | 2750 | 160 | 88 |
| 2N | 5,1 | 2600 | 155 | 2750 | 160 | 88 |
| 2O | 7,4 | 2500 | 155 | 2700 | 160 | 79 |
| 2P | 6,3 | 2500 | 155 | 2700 | 160 | 82 |
| 2R | 6,0 | 2600 | 155 | 2700 | 160 | 87 |

*Beispiel 5*

Die Eignung der Copolymeren als Gleitmittel zeigte sich auch beim Dauerwalztest. Dazu wurden Gemische aus 100 Gewichtsteilen eines Suspensions PVC, 1,5 Gewichtsteile Dibutylzinndimonomethylmaleat, 0,5 bzw. 1 Gewichtsteil des Copolymeren bzw. eines handelsüblichen Gleitmittels sowie 1 Gewichtsteil eines Fettalkohols bzw. Glycerinmonofettsäureesters und 1 Gewichtsteil Polymethacrylat als Fliessmittel hergestellt. Für den Dauerwalztest wurden folgende Bedingungen eingestellt:

Temperatur der Vorderrolle 180°C,

Temperatur der Hinterrolle 176°C,

Spaltbreite 0,9 mm,

Reibungsverhältnis 1 : 1 und

Drehzahl 15 U/min.

Alle 5 min. wurden Proben entnommen und der Test wurde abgebrochen, wenn die Probe an der Rolle klebte oder wenn eine braune Verfärbung beobachtet wurde. Die Ergebnisse sind in der nachfolgenden Tabelle 3 zusammengestellt.

Tabelle 3

| Copolymer | Gewichtsteile | Kleben auf dem Walzwerk nach Minuten | Schmelztemperatur nach dem Test |
|---|---|---|---|
| I | 0,5 | 15 | 187 |
| I | 1,0 | 30 (braun, klebt nicht) | 186 |
| 2A | 0,5 | 25 | 188 |
| 2A | 1,0 | 35 (braun, klebt nicht) | 186 |
| 2C | 0,5 | 35 (braun, klebt nicht) | 188 |
| 2C | 1,0 | 35 (braun, klebt nicht) | 188 |
| 2D | 0,5 | 20 | 187 |
| 2E | 0,5 | 18 | 186 |
| 2F | 0,5 | 15 | 186 |
| 2F | 1,0 | 25 | 187 |
| 2G | 0,5 | 20 | 186 |
| 2L | 1,0 | 10 | 186 |
| 2O | 0,5 | 15 | 186 |
| 2O | 1,0 | 30 (braun, klebt nicht) | 187 |
| 2P | 0,5 | 20 | 187 |
| 2P | 1,0 | 30 (braun, klebt nicht) | 187 |
| 2R | 0,5 | 10 | 186 |
| 2R | 1,0 | 10 | 186 |
| 1A | 0,5 | 25 | 186 |
| 1B | 0,5 | 25 | 186 |
| 1C | 0,5 | 20 | 186 |
| 1D | 0,5 | 30 (braun, klebt nicht) | 186 |
| 1E | 0,5 | 25 | 186 |

**Patentansprüche für die Vertragsstaaten:**
BE, CH, FR, GB, IT, LI, NL

1. Copolymere aus $\alpha$-$\beta$-ungesättigten Dicarbonsäureestern mit $\alpha$-Olefinen, dadurch gekennzeichnet, dass sie aus $\alpha$-Olefinen mit 8 - 24 C-Atomen und aus $\alpha$-$\beta$-ungesättigten Dicarbonsäureestern, deren Alkoholkomponente äthoxilierte Alkohole mit einem Äthoxilierungsgrad von 1 - 45 sind, aufgebaut sind.

2. Copolymere nach Anspruch 1, dadurch gekennzeichnet, dass die $\alpha$-$\beta$-ungesättigten Dicarbonsäureester $\alpha$-$\beta$-ungesättigte Dicarbonsäure-diester sind.

3. Copolymere nach den Ansprüchen 1 - 2, dadurch gekennzeichnet, dass die $\alpha$-$\beta$-ungesättigten Dicarbonsäureester Maleinsäureester und/oder Fumarsäureester sind.

4. Copolymere nach den Ansprüchen 1 - 3, dadurch gekennzeichnet, dass die $\alpha$-Olefine unverzweigt sind.

5. Copolymere nach den Ansprüchen 1 - 4, dadurch gekennzeichnet, dass das Molverhältnis $\alpha$-Olefin zu $\alpha$-$\beta$-ungesättigter Dicarbonsäureester 0,5 bis 4 beträgt.

6. Copolymere nach den Ansprüchen 1 - 5, dadurch gekennzeichnet, dass sie aus $\alpha$-Olefinen mit 10 - 16 Kohlenstoffatomen aufgebaut sind.

7. Copolymere nach den Ansprüchen 1 - 6, dadurch gekennzeichnet, dass der Äthoxilierungsgrad 1 - 20 beträgt.

8. Verfahren zur Herstellung der Copolymeren aus $\alpha$-$\beta$-ungesättigten Dicarbonsäureestern mit $\alpha$-Olefinen nach den Ansprüchen 1 - 7, dadurch gekennzeichnet, dass $\alpha$-Olefine mit 8 - 24 C-Atomen und $\alpha$-$\beta$-ungesättigte Dicarbonsäureanhydride bzw. $\alpha$-$\beta$-ungesättigte Dicarbonsäuren bei Temperaturen von 80 bis 210°C in Gegenwart eines Peroxidkatalysators in Inertgasatmosphäre copolymerisiert werden und im Anschluss daran mit äthoxilierten Alkoholen mit einem Äthoxilierungsgrad von 1 - 45 im Molverhältnis von 1:1 bis 1:2 $\alpha$-$\beta$-ungesättigte Dicarbonsäure (bzw. Anhydrid) : äthoxiliertem Alkohol verestert werden.

9. Verfahren zur Herstellung der Copolymeren aus $\alpha$-$\beta$-ungesättigten Dicarbonsäureestern mit $\alpha$-Olefinen nach den Ansprüchen 1 - 7, dadurch gekennzeichnet, dass $\alpha$-Olefine mit 8 - 24 C-Atomen und $\alpha$-$\beta$-ungesättigte Dicarbonsäureester, deren Alkoholkomponente äthoxilierte Alkohole mit einem Äthoxilierungsgrad von 1 - 20 bei Temperaturen von 140 - 210°C in Gegenwart eines Peroxidkatalysators in Inertgasatmosphäre copolymerisiert werden.

10. Verfahren nach Anspruch 9, dadurch gekennzeichnet, dass als $\alpha$-$\beta$-ungesättigte Dicarbonsäureester $\alpha$-$\beta$-ungesättigte Dicarbonsäure-diester als Monomer eingesetzt werden.

11. Verfahren nach den Ansprüchen 9 - 10, dadurch gekennzeichnet, dass als $\alpha$-$\beta$-ungesättigte Dicarbonsäureester Maleinsäureester und/oder Fumarsäureester eingesetzt werden.

12. Verfahren nach den Ansprüchen 8 - 11, dadurch gekennzeichnet, dass unverzweigte $\alpha$-Olefine eingesetzt werden.

13. Verfahren nach den Ansprüchen 8 - 12, dadurch gekennzeichnet, dass 0,005 Mol/Mol Monomer bis 0,05 Mol/Mol Monomer an Peroxidkatalysator zugegeben werden.

14. Verfahren nach den Ansprüchen 8 - 13, dadurch gekennzeichnet, dass der Peroxidkatalysator in Zeitabständen portionsweise zugegeben wird.

15. Verfahren nach Anspruch 14, dadurch gekennzeichnet, dass die Copolymerisation durch Zugabe eines Drittels der Gesamtmenge an Peroxidkatalysator gestartet wird und die Restmenge an Peroxidkatalysator in 8 - 12 Portionen zugegeben wird.

16. Verfahren nach den Ansprüchen 8 - 15, dadurch gekennzeichnet, dass $\alpha$-Olefine mit 10 - 16 C-Atomen eingesetzt werden.

17. Verfahren nach den Ansprüchen 9 - 16, dadurch gekennzeichnet, dass die Reaktionstemperatur 160 - 200°C beträgt.

18. Verfahren nach den Ansprüchen 9 - 17, dadurch gekennzeichnet, dass $\alpha$-Olefin und $\alpha$-$\beta$-ungesättigte Dicarbonsäureester im Molverhältnis 0,5 bis 7 eingesetzt werden.

19. Verwendung der Copolymeren nach den Ansprüchen 1 - 7 als Gleitmittel für die formgebende Verarbeitung von thermoplastischen Kunststoffen.

**Patentansprüche für den Vertragsstaat: AT**

1. Verfahren zur Herstellung der Copolymeren aus $\alpha$-$\beta$-ungesättigten Dicarbonsäureestern mit $\alpha$-Olefinen, dadurch gekennzeichnet, dass $\alpha$-Olefine mit 8 - 24 C-Atomen und $\alpha$-$\beta$-ungesättigte Dicarbonsäureanhydride bzw. $\alpha$-$\beta$-ungesättigte Dicarbonsäuren bei Temperaturen von 80 - 210°C in Gegenwart eines Peroxidkatalysators in Inertgasatmosphäre copolymerisiert werden und im Anschluss daran mit äthoxilierten Alkoholen mit einem Äthoxilierungsgrad von 1 - 45 im Molverhältnis von 1 : 1 bis 1 : 2 $\alpha$-$\beta$-ungesättigte Dicarbonsäure (bzw. Anhydrid) : äthoxiliertem Alkohol verestert werden.

2. Verfahren zur Herstellung der Copolymeren aus $\alpha$-$\beta$-ungesättigten Dicarbonsäureestern mit $\alpha$-Olefinen, dadurch gekennzeichnet, dass $\alpha$-Olefine mit 8 - 24 C-Atomen und $\alpha$-$\beta$-ungesättigte Dicarbonsäureester, deren Alkoholkomponente äthoxilierte Alkohole mit einem Äthoxilierungsgrad von 1 - 20 bei Temperaturen von 140 - 210°C in Gegenwart eines Peroxidkatalysators in Inertgasatmosphäre copolymerisiert werden.

3. Verfahren nach Anspruch 2, dadurch gekennzeichnet, dass als $\alpha$-$\beta$-ungesättigte Dicarbonsäureester $\alpha$-$\beta$-ungesättigte Dicarbonsäure-diester als Monomer eingesetzt werden.

4. Verfahren nach den Ansprüchen 2 - 3, dadurch gekennzeichnet, dass als $\alpha$-$\beta$-ungesättigte Dicarbonsäureester Maleinsäureester und/oder Fumarsäureester eingesetzt werden.

5. Verfahren nach den Ansprüchen 1 - 4, dadurch gekennzeichnet, dass unverzweigte $\alpha$-Olefine eingesetzt werden.

6. Verfahren nach den Ansprüchen 1 - 5, dadurch gekennzeichnet, dass 0,005 Mol/Mol Monomer bis 0,05 Mol/Mol Monomer an Peroxidkatalysator zugegeben werden.

7. Verfahren nach den Ansprüchen 1 - 6, dadurch gekennzeichnet, dass der Peroxidkatalysator in Zeitabständen portionsweise zugegeben wird.

8. Verfahren nach Anspruch 7, dadurch gekennzeichnet, dass die Copolymerisation durch Zugabe eines Drittels der Gesamtmenge an Peroxidkatalysator gestartet wird und die Restmenge an Peroxidkatalysator in 8 - 12 Portionen zugegeben wird.

9. Verfahren nach den Ansprüchen 1 - 8, dadurch gekennzeichnet, dass $\alpha$-Olefine mit 10 - 16 C-Atomen eingesetzt werden.

10. Verfahren nach den Ansprüchen 2 - 9, dadurch gekennzeichnet, dass die Reaktionstemperatur 160 - 210°C beträgt.

11. Verfahren nach den Ansprüchen 2 - 10, dadurch gekennzeichnet, dass $\alpha$-Olefin und $\alpha$-$\beta$-ungesättigte Dicarbonsäureester im Molverhältnis 0,5 - 7 eingesetzt werden.

12. Verwendung der Copolymeren erhalten nach den Ansprüchen 1 - 11 als Gleitmittel für die formgebende Verarbeitung von thermoplastischen Kunststoffen.

**Claims for the Contracting States:**
BE, CH, FR, GB, IT, LI, NL

1. Copolymers for $\alpha,\beta$-unsaturated dicarboxylic acid esters with $\alpha$-olefins, characterized in that they consists of $\alpha$-olefins containing from 8 to 24 C-atoms and of $\alpha,\beta$-unsaturated dicarboxylic acid esters of which the alcohol component is an ethoxylated al-cohol having a degree of ethoxylation of from 1 to 45.

2. Copolymers as claimed in claim 1, characterized in that the $\alpha,\beta$-unsaturated dicarboxylic acid ester are $\alpha,\beta$-unsaturated dicarboxylic acid diesters.

3. Copolymers as claimed in claim 1 and 2, characterized in that the $\alpha,\beta$-unsaturated dicarboxylic acid esters are maleic acid and/or fumaric acid esters.

4. Copolymers as claimed in claims 1 to 3, characterized in that the $\alpha$-olefins are unbranched.

5. Copolymers as claimed in claims 1 to 4, characterized in that the molar ratio of $\alpha$-olefin to $\alpha,\beta$-unsaturated dicarboxylic acid ester is from 0.5 to 4.

6. Copolymers as claimed in claims 1 to 5, characterized in that they consist of $\alpha$-olefins containing from 10 to 16 C-atoms.

7. Copolymers as claimed in claims 1 to 6, characterized in that the degree of ethoxylation is from 1 to 20.

8. A process for producing the copolymers of $\alpha,\beta$-unsaturated dicarboxylic acid esters with $\alpha$-olefins claimed in claims 1 to 7, characterized in that $\alpha$-olefins containing from 8 to 24 C-atoms and $\alpha,\beta$-unsaturated dicarboxylic acid anhydrides or $\alpha,\beta$-unsaturated dicarboxylic acids are copolymerized at 80 to 210°C in an inert gas in the presence of a peroxide catalyst and then esterified with ethoxylated alcohols having a degree of ethoxylation of from 1 to 45 in a molar ratio of $\alpha,\beta$-unsaturated dicarboxylic acid (or anhydride) to ethoxylated alcohol of from 1 : 1 to 1 : 2.

9. A process for producing the copolymers of $\alpha,\beta$-unsaturated dicarboxylic acid esters with $\alpha$-olefins claimed in claims 1 to 7, characterized in that $\alpha$-olefins containing from 8 to 24 C-atoms and $\alpha,\beta$-unsaturated dicarboxylic acid esters, of which the al-cohol component is an ethoxylated alcohol having a degree of ethoxylation of from 1 to 20, are copolymerized in an inert gas at 140 to 210°C in the presence of a peroxide catalyst.

10. A process as claimed in claim 9, characterized in that $\alpha,\beta$-unsaturated dicarboxylic acid diesters are used as the $\alpha,\beta$-unsaturated dicarboxylic acid ester monomer.

11. A process as claimed in claims 9 and 10, characterized in that maleic acid esters and/or fumaric acid esters are used as the $\alpha,\beta$-unsaturated dicarboxylic acid esters.

12. A process as claimed in claims 8 to 11, characterized in that unbranched $\alpha$-olefins are used.

13. A process as claimed in claims 8 to 12, characterized in that the peroxide catalyst is added in a quantity of from 0.005 mole to 0.05 mole per mole of monomer.

14. A process as claimed in claims 8 to 13, characterized in that the peroxide catalyst is added in portions at intervals.

15. A process as claimed in claim 14, characterized in that copolymerization is initiated by the addition of one third of the total quantity of peroxide catalyst, the remainder of the peroxide catalyst being added in 8 to 12 portions.

16. A process as claimed in claims 8 to 15, characterized in that $\alpha$-olefins containing from 10 to 16 C-atoms are used.

17. A process as claimed in claims 9 to 16, characterized in that the reaction temperature is in the range from 160 to 200°C.

18. A process as claimed in claims 9 to 17, characterized in that the $\alpha$-olefins and the $\alpha,\beta$-unsaturated dicarboxilic acid ester are used in a molar ratio of from 0.5 to 7.

19. The use of the copolymers claimed in claims 1 to 7 as lubricants in the molding of thermoplastic plastics.

**Claims for the Contracting State: AT**

1. A process for producing copolymers of $\alpha,\beta$-unsaturated dicarboxylic acid esters with $\alpha$-olefins , characterized in that $\alpha$-olefins containing from 8 to 24 C-atoms and $\alpha,\beta$-unsaturated dicarboxylic acid anhydrides or $\alpha,\beta$-unsaturated dicarboxylic acids are copolymerized in an inert gas at 80 to 210°C in the presence of a peroxide catalyst and then esterified with ethoxylated alcohols having a dregee of ethoxylation of from 1 to 45 in a molar ratio of $\alpha,\beta$-unsaturated dicarboxylic acid (or anhydride) to ethoxylated alchol of from 1 : 1 to 1 : 2.

2. A process for producing copolymers of $\alpha,\beta$-unsaturated dicarboxylic acid esters with $\alpha$-olefins, characterized in that $\alpha$-olefins containing from 8 to 24 C-atoms and $\alpha,\beta$-unsaturated dicarboxylic acid esters, of which the alcohol component is an ethoxylated alcohol having a degree of ethoxylation of from 1 to 20, are copolymerized in an inert gas at 140 to 210°C in the presence of a peroxide catalyst.

3. A process as claimed in claim 2, characterized in that $\alpha,\beta$-unsaturated dicarboxylic acid diesters are used as the $\alpha,\beta$-unsaturated dicarboxylic acid ester monomer.

4. A process as claimed in claims 2 and 3, characterized in that maleic acid esters and/or fumaric acid esters are used as the $\alpha,\beta$-unsaturated dicarboxylic acid esters.

5. A process as claimed in claims 1 to 4, characterized in that unbranched $\alpha$-olefins are used.

6. A process as claimed in claims 1 to 5, characterized in that the peroxide catalyst is added in a quantity of from 0.005 mole to 0.05 mole per mole of monomer.

7. A process as claimed in claims 1 to 6, characterized in that the peroxide catalyst is added in portions at intervals.

8. A process as claimed in claim 7, characterized in that copolymerization is initiated by the addition of one third of the total quantity of peroxide catalyst, the remainder of the peroxide catalyst being added in 8 to 12 portions.

9. A process as claimed in claims 1 to 8, characterized in that $\alpha$-olefins containing from 10 to 16 C-atoms are used.

10. A process as claimed in claims 2 to 9, characterized in that the reaction temperature is in the range from 160 to 210°C.

11. A process as claimed in claims 2 to 10, characterized in that the -olefins and the $\alpha,\beta$-unsaturated dicarboxylic acid ester are used in a molar ratio of from 0.5 to 7.

12. The use of the copolymers obtained in accordance with claims 1 to 11 as lubricants for the molding of thermoplastic plastics.


**Revendications pour les Etats contractants:**
BE, CH, FR, GB, IT, LI, NL

1. Copolymères d'esters d'acides dicarboxyliques $\alpha$-$\beta$-insaturés avec des $\alpha$-oléfines, caractérisés par le fait qu'ils sont constitués à partir d'$\alpha$-oléfines ayant 8 à 24 atomes de carbone et d'esters d'acides dicarboxyliques $\alpha$-$\beta$-insaturés dont les constituants alcool sont des alcools oxy-éthylés avec un degré d'oxyéthylation de 1-45.

2. Copolymères selon la revendication 1, caractérisés par le fait que les esters d'acides dicarboxyliques $\alpha$-$\beta$-insaturés sont des diesters d'acides dicarboxyliques $\alpha$-$\beta$-insaturés.

3. Copolymères selon les revendications 1-2, caractérisés par le fait que les esters d'acides dicarboxyliques $\alpha$-$\beta$-insaturés sont des esters de l'acide maléique et/ou des esters de l'acide fumarique.

4. Copolymères selon les revendications 1 à 3, caractérisés par le fait que les $\alpha$-oléfines sont non ramifiées.

5. Copolymères selon les revendications 1 à 4, caractérisés par le fait que le rapport molaire $\alpha$-oléfines à ester d'acide dicarboxylique $\alpha$-$\beta$-insaturé est de 0,5 à 4.

6. Copolymères selon les revendications 1 à 5, caractérisés par le fait qu'ils sont constitués à partir d'$\alpha$-oléfines ayant 10 à 16 atomes de carbone.

7. Copolymères selon les revendications 1 à 6, caractérisés par le fait que le degré d'oxyéthylation est de 1 à 20.

8. Procédé pour la préparation de copolymères d'esters d'acides dicarboxyliques $\alpha$-$\beta$-insaturés avec des $\alpha$-oléfines selon les revendications 1 à 7, caractérisé par le fait que des $\alpha$-oléfines ayant 8 à 24 atomes de carbone et des anhydrides d'acides dicarboxyliques $\alpha$-$\beta$-insaturés ou des acides dicarboxyliques $\alpha$-$\beta$-insaturés sont copolymérisés à des températures de 80 à 210°C en présence d'un catalyseur peroxyde dans une atmosphère de gaz inerte puis sont estérifiés avec des alcools oxyéthylés ayant un degré d'oxyéthylation de 1 à 45, dans un rapport molaire acide dicarboxylique $\alpha$-$\beta$-insaturé (ou anhydride) : alcool oxyéthylé de 1 : 1 à 1 : 2.

9. Procédé de préparation de copolymères d'esters d'acides dicarboxyliques $\alpha$-$\beta$-insaturés avec des $\alpha$-oléfines selon les revendications 1 à 7, caractérisé par le fait que des $\alpha$-oléfines ayant 8 à 24 atomes de carbone et des esters d'acides dicarboxyliques $\alpha$-$\beta$-insaturés dont les constituants alcool sont des alcools oxyéthylés ayant un degré d'oxyéthylation de 1 à 20, sont copolymérisés à des températures de 140 à 210°C en présence d'un catalyseur peroxyde dans une atmosphère de gaz inerte.

10. Procédé selon la revendication 9, caractérisé par le fait que les diesters d'acides dicarboxyliques $\alpha$-$\beta$-insaturés en tant qu'esters d'acides dicarboxyliques $\alpha$-$\beta$-insaturés, sont utilisés comme monomères.

11. Procédé selon les revendications 9 et 10, caractérisé par le fait que les esters de l'acide maléique et/ou les esters de l'acide fumarique sont utilisés comme esters d'acides dicarboxyliques $\alpha$-$\beta$-insaturés.

12. Procédé selon les revendications 8 à 11, caractérisé par le fait que sont utilisées des $\alpha$-oléfines non ramifiées.

13. Procédé selon les revendications 8 à 12, caractérisé par le fait que le catalyseur peroxyde est ajouté à raison de 0,005 mole/mole de monomère à 0,05 mole/mole de monomère.

14. Procédé selon les revendications 8 à 13, caractérisé par le fait que le catalyseur peroxyde est ajouté par portions par inervalles de temps.

15. Procédé selon la revendication 14, caractérisé par le fait que la copolymérisation est mise en route par addition d'un tiers de la quantité totale du catalyseur peroxyde et que la quantité restante du catalyseur peroxyde est ajoutée en 8 à 12 portions.

16. Procédé selon les revendications 8 à 15, caractérisé par le fait que sont utilisées des $\alpha$-oléfines ayant 10 à 16 atomes de carbone.

17. Procédé selon les revendications 9 à 16, caractérisé par le fait que la température de la réaction est de 160 à 200°C.

18. Procédé selon les revendications 9 à 17, caractérisé par le fait que l'$\alpha$-oléfine et l'ester de l'acide dicarboxylique $\alpha$-$\beta$-insaturé sont utilisés dans un rapport de 0,5 à 7.

19. Utilisation des copolymères selon les revendications 1 à 7, comme lubrifiants pour le façonnage de matières synthétiques thermoplastiques.


**Revendications pour l'Etat contractant: AT**

1. Procédé pour la préparation de copolymères d'esters d'acides dicarboxyliques $\alpha$-$\beta$-insaturés avec

des α-oléfines, caractérisé par le fait que des α-oléfines ayant 8 à 14 atomes de carbone et des anhydrides d'acides dicarboxyliques α-β-insaturés ou des acides dicarboxyliques α-β-insaturés sont copolymérisés à des températures de 80 à 210°C en présence d'un catalyseur peroxyde dans une atmosphère de gaz inerte, puis après cela, sont estérifiés avec des alcools oxyéthylés ayant un degré d'oxyéthylation de 1 à 45 dans un rapport molaire acide dicarboxilique α-β-insaturé (ou anhydride) : alcool oxyéthylé de 1 : 1 et 1 : 2.

2. Procédé de préparation de copolymères d'esters d'acides dicarboxyliques α-β-insaturés avec des α-oléfines, caractérisé par le fait que des α-oléfines ayant 8 à 24 atomes de carbone et des esters d'acides dicarboxyliques α-β-insaturés dont les constituants alcool sont des alcools oxyéthylés ayant un degré d'oxyéthylation de 1 à 20, sont copolymérisés à des températures de 140 à 210°C en présence d'un catalyseur peroxyde dans une atmosphère de gas inerte.

3. Procédé selon la revendication 2, caractérisé par le fait que les diesters d'acides dicarboxyliques α-β-insaturés sont, en tant qu'esters d'acides dicarboxyliques α-β-insaturés, utilisés comme monomères.

4. Procédé selon les revendications 2 et 3, caractérisé par le fait que les esters de l'acide maléique et/ou les esters de l'acide fumarique sont utilisés comme esters d'acides dicarboxyliques α-β-insaturés.

5. Procédé selon les revendications 1 à 4, caractérisé par le fait que sont utilisées des α-oléfines non ramifiées.

6. Procédé selon les revendications 1 à 5, caractérisé par le fait que le catalyseur peroxyde est ajouté à raison de 0,005 mole/mole de monomère à 0,05 mole/mole de monomère.

7. Procédé selon les revendications 1 à 6, caractérisé par le fait que le catalyseur peroxyde est ajouté par portions par inervalles de temps.

8. Procédé selon la revendication 7, caractérisé par le fait que la copolymérisation est mise en route par addition d'un tiers de la quantité totale du catalyseur peroxyde et que la quantité restante du catalyseur peroxyde est ajoutée en 8 à 12 portions.

9. Procédé selon les revendications 1 à 8, caractérisé par le fait que sont utilisées des α-oléfines ayant 10 à 16 atomes de carbone.

10. Procédé selon les revendications 2 à 9, caractérisé par le fait que la température de réaction est de 160 à 210°C.

11. Procédé selon les revendications 2 à 10, caractérisé par le fait que l'α-oléfine et l'ester d'acide dicarboxylique α-β-insaturé sont utilisés dans un rapport molaire de 0,5 à 7.

12. Utilisation des copolymères obtenus selon les revendications 1 à 11 comme lubrifiants pour le façonnage de matières synthétiques thermoplastiques.